# EUROPEAN PATENT APPLICATION

(11) **EP 1 881 033 A1**
(43) Date of publication of application: **23.01.2008**
(21) Application number: 06405315.0
(22) Date of filing: 20.07.2006
(51) Int. Cl.: C08L 63/00

(54) **Diluent free epoxy resin formulation**

(71) Applicant: ABB RESEARCH LTD., 8050 Zürich (CH)
(72) Inventor: Ghoul, Cherif, 68200 Mulhouse (FR); Kommann, Xavier, 8600 Dübendorf (CH); Paakkonen, Saija, 00320 Helsinki (FI); Eriksson, Hans-Ake, 72170 Västeras (SE); Koponen, Osmo, 02610 Espoo (FI); Chieregato, Stefano, 26100 Cremona (IT)
(74) Representative: ABB Patent Attorneys

(57) **Abstract**

A diluent free epoxy resin formulation, which is suitable for the use as coil insulation material, wherein said formulation comprises (a) a purified grade of at least one diglycidyl ether of a bisphenol compound or at least one cycloaliphatic diglycidyl ether compound or a mixture of such compounds, wherein said compounds have an epoxy equivalent weight not exceeding 10% of the minimum epoxy equivalent weight calculated for each compound; and (b) that said formulation optionally further comprises up to 50% by weight of a diglycidyl ether of a bisphenol compound or of a cycloaliphatic diglycidyl ether compound or a novolac epoxy or a mixture of such compounds, wherein said compounds have an epoxy equivalent weight exceeding 10% of the minimum epoxy equivalent weight calculated for each compound; and (c) a polymerization catalyst; an electric conductor carrying an impregnated insulation layer insulated with a diluent free epoxy resin formulation as coil insulation material according to the invention.

## Description

The present invention refers to a diluent free epoxy resin formulation which is suitable for the use as coil insulation material.

### State of the art

In electrical machines, curable resins are commonly used to impregnate insulation layers, such as mica paper, wound around an electric conductor, such as the coils of the stator. These resins act as a binder between the different layers and provide a good electrical insulation to the coil. A common way to diffuse the resin into the layers and the coil consists for example in immersing a non-impregnated stator under vacuum in a resin bath and to subsequently apply pressure. After several hours of impregnation, the stator is placed in an oven for curing of the resin. This process is known as the vacuum pressure impregnation (VPI) process. An important requirement of the resin is that it should have a sufficiently low viscosity to impregnate thick layers of mica tape commonly used in electrical machines. To obtain this low viscosity, polymer systems like anhydride cured epoxies, polyesterimides, or mixtures of both resins are used. These systems have a low viscosity because one of their components, e.g. the anhydride in an anhydride cured epoxy resin composition, acts as a diluent. The problem is that these diluents evaporate during the impregnation and the curing processes, which constitutes a potential danger for the health of workers and for the environment. In order to reduce the amount of emissions, it has been proposed to use catalyzed epoxies with small amounts of reactive diluents like polypropylene glycol, in order to obtain the desired low viscosity. VPI resins commonly used in industry and newly proposed solutions to reduce the emissions during manufacturing contain diluents that can potentially evaporate during the VPI process. Therefore, there is a need for diluent free epoxy resin formulations for coil insulation that can limit the emission level as low as technically possible.

### Description of the invention

The present invention proposes the use of a diluent free specific catalyzed epoxy resin formulation which is suitable for the use as coil insulation material. Said formulation has a sufficiently low viscosity at a temperature of about 50°C, which is generally the temperature level at which the impregnation process is carried out.

It has been found that when a purified grade of a diglycidyl ether of a bisphenol compound such as a diglycidyl ether of bisphenol A, a diglycidyl ether of bisphenol F, or a corresponding cycloaliphatic diglycidyl ether or a mixture of these compounds is used, wherein said compounds or said mixture of compounds have an epoxy equivalent weight (also named epoxide value) not exceeding 10% of the minimum epoxy equivalent weight of each compound, the impregnation process as described above can be carried out without the addition of a diluent at a process temperature of about 50°C. Preferred is for example a mixture of diglycidyl ether of bisphenol A and diglycidyl ether of bisphenol F. Variable ratios between diglycidyl ether of bisphenol A and diglycidyl ether of bisphenol F permit to adjust the viscosity level of the resin whereby diglycidyl ether of bisphenol A also lowers the overall price of the resin. Said mixture further has the advantage that it has a very low tendency to crystallize.

The present invention is defined in the claims. The present invention refers to a diluent free epoxy resin formulation, which is suitable for the use as coil insulation material, characterized in that said formulation comprises (a) a purified grade of at least one diglycidyl ether of a bisphenol compound or at least one cycloaliphatic diglycidyl ether compound or a mixture of such compounds, wherein said compounds have an epoxy equivalent weight not exceeding 10% of the minimum epoxy equivalent weight calculated for each compound [component (a)], and (b) that said formulation optionally further comprises up to 50% by weight (calculated to the total weight of the formulation) of a diglycidyl ether of a bisphenol compound or of a cycloaliphatic diglycidyl ether compound or a novolac epoxy or a mixture of such compounds, wherein said compounds have an epoxy equivalent weight exceeding 10% of the minimum epoxy equivalent weight calculated for each compound [component (b)]; and (c) a polymerization catalyst.

The present invention further refers to a molded coil, characterized in that said coil has been molded with a diluent free epoxy resin formulation as coil insulation material according to the present invention and as defined herein above.

The present invention further refers to an electric conductor, preferably an electric coil, preferably an electric coil of a stator, said electric conductor carrying an impregnated insulation layer, which is preferably made from mica paper, wound around an electric conductor, characterized in that said impregnated insulation layer is insulated with a diluent free epoxy resin formulation as coil insulation material according to the present invention and as defined herein above.

The purified grade of the at least one diglycidyl ether of a bisphenol compound or of the at least one cycloaliphatic diglycidyl ether compound or a mixture of such compounds, wherein said compounds have an epoxy equivalent weight not exceeding 10% of the minimum epoxy equivalent weight calculated for each compound [component (a)] is preferably selected from the group comprising diglycidyl ethers of bisphenol A, diglycidyl ethers of bisphenol F, and corresponding cycloaliphatic diglycidyl ethers.

The optional component (b) of the formulation which comprises up to 30% by weight of a diglycidyl ether of a bisphenol compound or of a cycloaliphatic diglycidyl ether compound or a novolac epoxy or a mixture of such compounds, wherein said compounds have an epoxy equivalent weight exceeding 10% of the minimum epoxy equivalent weight calculated for each compound is preferably selected from the group comprising diglycidyl ethers of bisphenol A, diglycidyl ethers of bisphenol F, and corresponding cycloaliphatic diglycidyl ethers. Novolac epoxy compounds are preferably selected from D.E.N. epoxies (Polyglycidyl ether of phenol-formaldehyde Novolac) from Dow Chemical Company like D.E.N. 431 for instance.

Diglycidyl ether of bisphenol A is represented by the following formula (I) 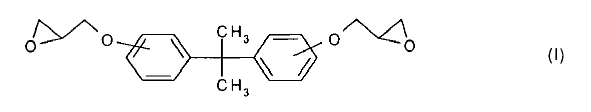 wherein the glycidyl ether substituent each time preferably is in the para-position. Compound (I) has a calculated molecular weight of 340. Compound (I) carries two epoxy equivalents per 340 grams, which means that the calculated minimum epoxy equivalent weight for compound (I) is 170 [i.e. 340 divided by 2]. The minimum epoxy equivalent weight for compound (I) as contained in component (a) therefore should not exceed the value of 187, i.e. the sum of [170+17].

Diglycidyl ether of bisphenol F is represented by the following formula (II): 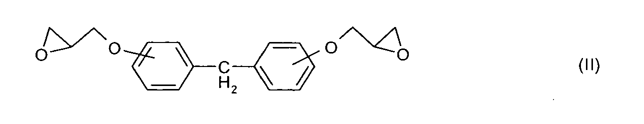 wherein the glycidyl ether substituent each time can be in the ortho or para-position, so that the compound can represent o,o'- or o,p' or p,p'-bis(glycidyloxyphenyl)methane. Compound (II) has a calculated molecular weight of 312. Compounds (II) carries two epoxy equivalents per 312 grams, which means that the calculated minimum epoxy equivalent weight for compound (II) is 156. The minimum epoxy equivalent weight for compound (II) as contained in component (a) therefore should not exceed the value of 171.6, i.e. the sum of [156 + 15.6].

As the glycidyl group can react relatively easily with hydroxyl groups there are formed polymers during production as is illustrated by the following formula (III): 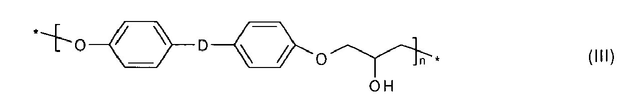 wherein D for example is -CH₂- or -C(CH₃)₂-. This explains why a certain glycidyl ether may have different values for the epoxy equivalent weight.

Component (a) is a purified grade of at least one diglycidyl ether of a bisphenol compound or at least one cycloaliphatic diglycidyl ether compound or a mixture of such compounds, wherein said compounds have an epoxy equivalent weight not exceeding 10% of the minimum epoxy equivalent weight calculated for each compound. Preferably the compound or compounds of component (a) have an epoxy equivalent weight not exceeding 8%, preferably not exceeding 6%, preferably not exceeding 5%, preferably not exceeding 4%, preferably not exceeding 3% and preferably not exceeding 2% of the minimum epoxy equivalent weight calculated for each compound.

The optional component (b) comprises up to 50% by weight of a diglycidyl ether of a bisphenol compound or of a cycloaliphatic diglycidyl ether compound or a novolac epoxy or a mixture of such compounds, wherein said compounds have an epoxy equivalent weight exceeding 10% of the minimum epoxy equivalent weight calculated for each compound. Preferably the compound or the compounds of component (b) have an epoxy equivalent weight exceeding the minimum epoxy equivalent weight in the range of 12 to 20 %, preferably within the range of 12 to 15% calculated for each compound. However the amount of the difference to the minimum epoxide value is not critical as long as the viscosity at about 50°C remains low enough for the reaching the purpose of the present invention. Said viscosity is within a preferred viscosity range of from 50 to 400 mPa.s. at a temperature of 50°C. Combining the components (a) and (b) in order to obtain the required viscosity of the mixture is within the general knowledge of the expert in the art.

Diglycidyl ethers of bisphenol A and diglycidyl ethers of bisphenol F are known in the art and need no further explanation.

The formulation optionally further comprises up to 50% by weight of component (b), i.e. a diglycidyl ether of a bisphenol compound or of a cycloaliphatic diglycidyl ether compound or a novolac epoxy or a mixture of such compounds as defined above. Preferably the formulation optionally further comprises 10-30% by weight, preferably 15-30% by weight, of said component (b), calculated to the total weight of the formulation.

Preferred is a component (a) comprising a mixture of diglycidyl ether of bisphenol A and diglycidyl ether of bisphenol F, wherein the ratio of diglycidyl ether of bisphenol A to diglycidyl ether of bisphenol F is within the range of 10:90 to 50:50% by weight, preferably within the range of 20:80 to 40:60% by weight, and preferably at about 25:75% by weight.

Preferred is further a component (a) comprising a mixture of a cycloaliphatic diglycidyl ether, preferably EPR 758 from Bakelite or CY 184 from Huntsman and diglycidyl ether of bisphenol F, wherein the ratio of the cycloaliphatic diglycidyl ether to diglycidyl ether of bisphenol F is within the range of 10:90 to 40:60% by weight, preferably within the range of 20:80 to 30:70% by weight, and preferably at about 25:75% by weight.

The polymerization catalyst is preferably chosen from boron trichloride-amine complexes, boron trifluoride-amine complexes, organotin complexes, metal acetylacetonate with phenolic accelerators and other known latent catalysts which do not initiate polymerization at room temperature. The polymerization catalyst is preferably used in concentrations within the range of 0.5% to 5% by weight, preferably within a concentration of about 1% to 3% by weight. Such catalysts are commercially available, for example as Leecure 38-239B from Leepoxy, DY 9577 from Huntsman, EPX 04552 from Bakelite, or Omicure BC-120 from CVC Specialty Chemicals.

The impregnation process and the polymerization of the composition according to the present invention can be handled in a manner known per se. Also the vacuum pressure impregnation (VPI) process can be used.

The following examples illustrate the invention without limiting the invention.

### Example 1

The diluent free resin formulation preparation does not require sophisticated equipment. First, the crystallized diglycidyl ether of bisphenol F resin is melted at 50°C. Then, the defined amount of diglycidyl ether of bisphenol A is added and the mixture is stirred. The defined amount of catalyst is then added and the mixture is stirred again. The mixture is then ready to be used for making an insulation as described in the specification. Table 1 presents several examples of the formulation. Example D is a comparative example.

The diglycidyl ether of bisphenol F resin has an epoxy equivalent weight of 157 to 167 which is 0.6 to 7% more than the calculated minimum epoxy equivalent weight said compound.

The diglycidyl ether of bisphenol A resin has an epoxy equivalent weight of 171 to 176 which is 0.6 to 4 % more than the calculated minimum epoxy equivalent weight said compound.

**Table 1**

| Composition: | A | B | C | D |
|---|---|---|---|---|
| Diglycidyl ether of Bisphenol F / phr | 75 | 75 | 75 | 75 |
| Diglycidyl ether of Bisphenol A / phr | 25 | 25 | 25 | 25 |
| Polypropylene Glycol / phr | | | | 3 |
| Boron trichloride-amine complex / phr | 2 | 2.5 | 3 | 2.5 5 |

| Processing Properties: | | | | |
|---|---|---|---|---|
| Gel time at 165°C / min | 12 | 11 | 6 | 9 |
| Time to 300 mPa.s at 50°C / days | 48 | 37 | 32 | 35 |
| Viscosity at 25°C / mPa.s | 1830 | 1830 | 1830 | 1380 |
| Viscosity at 50°C / mPa.s | 161 | 160 | 170 | 158 |

| Other Properties: | | | | |
|---|---|---|---|---|
| Tg after cure 10h at 165°C / °C | 125 | 130 | 139 | 123 |
| Dielectric losses tan δ at 130°C x 10⁻³ | 24 | 30 | 32 | 30 |

| | | | | |
|---|---|---|---|---|
| "phr" stands for "parts per hundred resin". The term resin corresponds in this case to the mixture of diglycidyl ethers of bisphenol A & F. | | | | |

### Discussion of Results

### 1. Comparison of compositions A, B, C with composition D:

The addition of 3 phr of a reactive diluent (polypropylene glycol) in composition D reduces the viscosity of the formulation at 25°C from 1830 to 1380 mPa.s. Even if the viscosity has been reduced, this level of viscosity is still too high for a room temperature impregnation. When the temperature is increased to 50°C, no significant effect of the reactive diluent can be seen on the viscosity. This illustrates the fact that a reactive diluent, e.g. polypropylene glycol, is not necessary to insure a good impregnation. The presence of diluent does not extend the tank stability at 50°C (time to 300 mPa.s at 50°C) or increase the dielectric losses of the resulting material at 130°C.

### 2. Comparison between composition A, composition B, and composition C:

Decreasing the amount of catalyst increases the tank stability at 50°C and increases the gel time at 165°C. The glass transition temperature of the resulting material decreases but to a limited extent. The amount of catalyst should be tuned to get the right balance between an optimal tank stability at 50°C and a sufficiently low gel time at 165°C to minimize dripping of the resin upon cure. Finally, the decrease of the amount of catalyst has a limited effect on the dielectric losses of the material at 130°C.

## Claims

1. A diluent free epoxy resin formulation, which is suitable for the use as coil insulation material, **characterized in that** said formulation comprises (a) a purified grade of at least one diglycidyl ether of a bisphenol compound or at least one cycloaliphatic diglycidyl ether compound or a mixture of such compounds, wherein said compounds have an epoxy equivalent weight not exceeding 10% of the minimum epoxy equivalent weight calculated for each compound [component (a)]; and (b) that said formulation optionally further comprises up to 50% by weight (calculated to the total weight of the formulation) of a diglycidyl ether of a bisphenol compound or of a cycloaliphatic diglycidyl ether compound or a novolac epoxy or a mixture of such compounds, wherein said compounds have an epoxy equivalent weight exceeding 10% of the minimum epoxy equivalent weight calculated for each compound [component (b)]; and (c) a polymerization catalyst.

2. A formulation according to claim 1, **characterized in that** the at least one diglycidyl ether of a bisphenol compound or the at least one cycloaliphatic diglycidyl ether compound of component (a) are selected from the group comprising diglycidyl ethers of bisphenol A, diglycidyl ethers of bisphenol F, and corresponding cycloaliphatic diglycidyl ethers.

3. A formulation according to claim 1 or 2, **characterized in that** said diglycidyl ether of a bisphenol compound or said cycloaliphatic diglycidyl ether compound or said novolac epoxy of component (b) are selected from the group comprising diglycidyl ethers of bisphenol A, diglycidyl ethers of bisphenol F, and corresponding cycloaliphatic diglycidyl ethers.

4. A formulation according to any one of the claims 1-3, **characterized in that** said novolac epoxy compound is selected from D.E.N. epoxies from Dow Chemical Company like D.E.N. 431 for instance.

5. A formulation according to any one of the claims 1-4, **characterized in that** the diglycidyl ether of bisphenol F is o,o'- or o,p' or p,p'-bis(glycidyloxyphenyl)methane.

6. A formulation according to any one of the claims 1-5, **characterized in that** component (a) has an epoxy equivalent weight not exceeding 8%, preferably not exceeding 6%, preferably not exceeding 5%, preferably not exceeding 4%, preferably not exceeding 3% and preferably not exceeding 2% of the minimum epoxy equivalent weight calculated for each compound.

7. A formulation according to any one of the claims 1-6, **characterized in that** component (b) has an epoxy equivalent weight exceeding the minimum epoxy equivalent weight in the range of 12 to 20 %, preferably within the range of 12 to 15% calculated for each compound.

8. A formulation according to any one of the claims 1-7, **characterized in that** the formulation has a viscosity within the range of from 50 to 400 mPa.s., at 50°C.

9. A formulation according to any one of the claims 1-8, **characterized in that** the formulation further comprises 10-30% by weight, preferably 15-30% by weight, of component (b), calculated to the total weight of the formulation.

10. A formulation according to any one of the claims 1-9, **characterized in that** component (a) comprises a mixture of diglycidyl ether of bisphenol A and diglycidyl ether of bisphenol F, wherein the ratio of diglycidyl ether of bisphenol A to diglycidyl ether of bisphenol F is within the range of 10:90 to 50:50% by weight, preferably within the range of 20:80 to 40:60% by weight, and preferably at about 25:75% by weight.

11. A formulation according to any one of the claims 1-9, **characterized in that** component (a) comprises a mixture of a cycloaliphatic diglycidyl ether, preferably EPR 758 from Bakelite or CY 184 from Huntsman and diglycidyl ether of bisphenol F, wherein the ratio of the cycloaliphatic diglycidyl ether to diglycidyl ether of bisphenol F is within the range of 10:90 to 40:60% by weight, preferably within the range of 20:80 to 30:70% by weight, and preferably at about 25:75% by weight.

12. A formulation according to any one of the claims 1-11, **characterized in that** the polymerization catalyst is chosen from boron trichloride-amine complexes, boron trifluoride-amine complexes, organotin complexes, metal acetylacetonate with phenolic accelerators and other known latent catalysts which do not initiate polymerization at room temperature.

13. A formulation according to claim 12, **characterized in that** the polymerization catalyst is present in concentrations within the range of 0.5% to 5% by weight, preferably within the range of 1% to 3% by weight.

14. A molded coil, **characterized in that** said coil has been molded with a diluent free epoxy resin formulation as coil insulation material according to any one of the claims 1-13.

15. An electric conductor, preferably an electric coil, preferably an electric coil of a stator, said electric conductor carrying an impregnated insulation layer, which is preferably made from mica paper, wound around an electric conductor, **characterized in that** said impregnated insulation layer is insulated with a diluent free epoxy resin formulation as coil insulation material according to any one of the claims 1-13.
